# EUROPÄISCHE PATENTSCHRIFT

(11) **EP 3 317 003 B1**
(45) Veröffentlichungstag und Bekanntmachung des Hinweises auf die Patenterteilung: **16.10.2019**
(21) Anmeldenummer: 16735576.7
(22) Anmeldetag: 01.07.2016
(51) Int. Cl.: B01F 5/06, B05B 1/30, B05B 7/04, B05B 7/12, B05B 12/08, B05B 7/24, F16K 31/122, F16K 1/38

(54) **BESCHICHTUNGSMITTELVENTIL**
COATING AGENT VALVE
SOUPAPE POUR AGENT DE REVÊTEMENT

(30) Priorität: 03.07.2015 DE 102015008659
(43) Veröffentlichungstag der Anmeldung: 09.05.2018
(73) Patentinhaber: Dürr Systems AG, 74321 Bietigheim-Bissingen (DE)
(72) Erfinder: HERRE, Frank, 71739 Oberriexingen (DE); MICHELFELDER, Manfred, 71711 Höpfigheim/Steinheim (DE); BAUMANN, Michael, 74223 Flein (DE); HERRMANN, Sascha, 71404 Korb (DE); SEIZ, Bernhard, 74348 Lauffen (DE); BUCK, Thomas, 74343 Sachsenheim (DE)
(74) Vertreter: v. Bezold & Partner Patentanwälte - PartG mbB
(86) Internationale Anmeldenummer: PCT/EP2016/001127
(87) Internationale Veröffentlichungsnummer: WO 2017/005354

(56) Entgegenhaltungen:
- EP-A1- 1 063 018
- EP-A2- 0 108 929
- WO-A1-2014/066005
- DE-A1- 3 834 674
- GB-A- 2 373 564

## Beschreibung

Die Erfindung betrifft ein Beschichtungsmittelventil zur Steuerung eines Fluidstroms eines Beschichtungsmittelgemischs aus zwei Beschichtungsmittelkomponenten, insbesondere eines Zweikomponentenlacks aus einem Stammlack und einem Härter.

Aus DE 10 2010 019 771 A1 ist ein Rotationszerstäuber bekannt, der zur Applikation eines Zweikomponentenlacks geeignet ist. Die beiden Lackkomponenten (Stammlack und Härter) werden dem Rotationszerstäuber hierbei über getrennte Leitungen zugeführt und in dem Zerstäuber durch einen Gittermischer gemischt. Die Steuerung der Lackabgabe erfolgt bei diesem bekannten Rotationszerstäuber durch ein Hauptnadelventil, das in dem Rotationszerstäuber stromabwärts hinter dem Gittermischer angeordnet und in der Regel pneumatisch angesteuert wird. Der Gittermischer und das Hauptnadelventil befinden sich hierbei in einem hohlen Farbrohr, das durch die hohle Turbinenwelle der Antriebsturbine in dem Rotationszerstäuber hindurch geführt wird. Hierbei benötigen die Nadel für das Hauptnadelventil und der Gittermischer räumlich getrennte Kanäle in dem Farbrohr, was zu einem Platzproblem führt. Eine Vergrößerung des Innenquerschnitts des Farbrohrs ist jedoch problematisch, da dann auch die hohle Turbinenwelle der Antriebsturbine des Rotationszerstäubers einen größeren Innenquerschnitt haben müsste. Dies würde wiederum zu einer Vergrößerung der bewegten Massen führen, so dass die Lagerung der Turbinenwelle und die Antriebsturbine selbst größer ausgeführt werden müssten. Dies würde wiederum zu höheren Investitionskosten und auch zu einem höheren Luftverbrauch führen. Darüber hinaus wäre der Rotationszerstäuber dann größer und schwerer.

Nachteilig an diesem bekannten Rotationszerstäuber ist die Tatsache, dass es bei geschlossenem oder verklemmtem Hauptnadelventil aufgrund eines Überdrucks zu Schäden stromaufwärts vor dem Rotationszerstäuber kommen kann.

Ein ähnlicher Rotationszerstäuber ist aus DE 102 12 601 A1 bekannt. Hierbei wird das Hauptnadelventil von einer Membran angetrieben, die mit Druckluft beaufschlagt wird. Auch hierbei kann es jedoch bei geschlossenem oder verklemmtem Hauptnadelventil aufgrund eines Überdrucks zu Schäden stromaufwärts vor dem Rotationszerstäuber kommen.

Ferner ist zum Stand der Technik hinzuweisen auf US 4 667 878, DE 101 15 472 A1, US 2005/0035220 A1 und DE 198 46 073 A1.

Zum allgemeinen technischen Hintergrund der Erfindung ist auch hinzuweisen auf GB 2 373 564 A, EP 0 108 929 A2, WO 2014/066005 A1 und EP 1 063 018 A1.

Schließlich offenbart DE 38 34 674 A1 ein Beschichtungsmittelventil gemäß dem Oberbegriff von Anspruch 1. Allerdings ermöglicht dieses bekannte Beschichtungsmittelventil in der Praxis keine gute Mischung verschiedener Beschichtungsmittelkomponenten.

Der Erfindung liegt deshalb die Aufgabe zugrunde, das vorstehend beschriebene Problem zu lösen.

Diese Aufgabe wird durch ein Beschichtungsmittelventil gemäß dem Hauptanspruch gelöst.

Das erfindungsgemäße Beschichtungsmittelventil weist eine automatische Druckentlastung auf, wenn der eingangsseitige Beschichtungsmitteldruck zu groß wird. Dadurch wird verhindert, dass stromaufwärts vor dem erfindungsgemäßen Beschichtungsmittelventil aufgrund eines Überdrucks Schäden oder Betriebsstörungen auftreten. Diese Druckentlastung wird dadurch erreicht, dass der Beschichtungsmitteldruck in dem Ventilraum stromabwärts hinter der Membran auf die Membran und damit auch auf die Ventilnadel wirkt, wodurch die Ventilnadel in Richtung der Öffnungsstellung gedrückt wird. Beim Überschreiten eines bestimmten Öffnungsdrucks öffnet der eingangsseitig anliegende Beschichtungsmitteldruck dann das Beschichtungsmittelventil, um Schäden durch eine Drucküberlastung zu vermeiden.

Die Erfindung umfasst auch die allgemeine technische Lehre, die technischen Funktionen der Ventilnadel und des Mischers in einem einzigen Bauteil zu integrieren. So hat die Ventilnadel die technische Funktion, die Antriebsbewegung des Ventilantriebs (z. B. Pneumatikkolben) auf den Ventilkopf zu übertragen, damit das Beschichtungsmittelventil schließt oder öffnet. Der Mischer hat dagegen die Aufgabe, die beiden Beschichtungsmittelkomponenten (z. B. Stammlack, Härter) miteinander zu mischen. Die Erfindung sieht nun vor, dass der Gittermischer zusätzlich die technische Funktion der Ventilnadel übernimmt und somit verschiebbar angeordnet ist, damit der verschiebbare Mischer den Ventilkopf entsprechend dem Ventilantrieb bewegen kann. Bei der erfindungsgemäßen Lösung wird der Mischer (z. B. Gittermischer, Wendelmischer) also wie eine Ventilnadel in dem Farbrohr bewegt, um den Ventilkopf wahlweise in eine Schließstellung oder in eine Öffnungsstellung zu bewegen.

Das erfindungsgemäße Beschichtungsmittelventil weist also zunächst in Übereinstimmung mit dem eingangs beschriebenen bekannten Hauptnadelventil einen Ventilsitz und einen verschiebbaren Ventilkopf auf, wobei der Ventilkopf in einer Schließstellung den Ventilsitz abdichtet und dadurch den Fluidstrom sperrt, wohingegen der Ventilkopf in einer Öffnungsstellung den Ventilsitz und dadurch auch den Fluidstrom freigibt.

Darüber hinaus weist das erfindungsgemäße Beschichtungsmittelventil einen Ventilantrieb auf, um den Ventilkopf zwischen der Schließstellung und der Öffnungsstellung zu verschieben. Beispielsweise kann der Ventilantrieb pneumatisch arbeiten, wobei ein Kolben entsprechend der gewünschten Ventilstellung mit Druck beaufschlagt wird.

Ferner umfasst auch das erfindungsgemäße Beschichtungsmittelventil eine verschiebbare Ventilnadel, die den Ventilantrieb mit dem Ventilkopf verbindet und den Ventilkopf entsprechend dem Ventilantrieb bewegt. Die Ventilnadel überträgt also die Antriebsbewegung des Ventilantriebs auf eine entsprechende Bewegung des Ventilkopfs.

Die Erfindung sieht nun vor, dass die Ventilnadel einen Mischer aufweist, der die Beschichtungsmittelkomponenten miteinander mischt. Bei der Ventilnadel handelt es sich im Rahmen der Erfindung also um ein bifunktionales Bauteil, das zum einen die Antriebskraft des Ventilantriebs auf den Ventilkopf überträgt und zum anderen die Beschichtungsmittelkomponenten miteinander mischt.

Hierbei ist zu erwähnen, dass die verschiebbare Ventilnadel zusätzlich zu dem Mischer auch weitere Bauteile umfassen kann, um die Bewegung des Ventilantriebs auf den Ventilkopf zu übertragen. Es ist also im Rahmen der Erfindung nicht erforderlich, dass die Ventilnadel einteilig ist und allein durch den Mischer gebildet wird.

Bei dem Mischer handelt es sich vorzugsweise um einen statischen Mischer, wie beispielsweise einen Gittermischer oder einen Wendelmischer. Gittermischer sind beispielsweise aus der bereits eingangs zitierten Patentanmeldung DE 10 2010 019 771 A1 bekannt.

Wendelmischer sind ebenfalls an sich aus dem Stand der Technik bekannt und werden auch als Kenics®-Mischer bezeichnet, so dass auf eine separate Beschreibung derartiger Wendelmischer verzichtet werden kann.

Bei dem erfindungsgemäßen Beschichtungsmittelventil ist vorzugsweise ein hohles Farbrohr vorgesehen, das zur Montage in einer hohlen Turbinenwelle eines Rotationszerstäubers dient, wie es in der bereits eingangs zitierten deutschen Patentanmeldung DE 10 2010 019 771 A1 beschrieben ist. Das Farbrohr ist dann im montierten Zustand in einer Turbinenwelle einer Antriebsturbine eines Rotationszerstäubers angeordnet.

In einer Variante der Erfindung verläuft innerhalb des Farbrohrs nur eine einzige Ventilnadel, die gleichzeitig einen Mischer bildet. In einer anderen Variante der Erfindung sind dagegen in dem Farbrohr mehrere Ventilnadeln angeordnet, die jeweils einen Mischer bilden.

In einem bevorzugten Ausführungsbeispiel der Erfindung weist das Beschichtungsmittelventil ein verschiebbares Druckstück auf, das an seinem distalen Ende mit dem verschiebbaren Mischer verbunden ist und diesen verschiebt. Das verschiebbare Druckstück wirkt also auf den verschiebbaren Mischer und bildet quasi eine Verlängerung der Ventilnadel. Darüber hinaus weist das Beschichtungsmittelventil in dem bevorzugten Ausführungsbeispiel einen Ventilraum auf, in dem das Druckstück verschiebbar angeordnet ist, wobei der Ventilraum zumindest abschnittsweise zylindrisch ausgeführt ist. Ferner weist das erfindungsgemäße Beschichtungsmittelventil vorzugsweise eine flexible Membran auf, die mittig dichtend an dem Druckstück befestigt ist, während die Membran mit ihrem Umfangsrand dichtend an der Innenwand des Ventilraums befestigt ist. Die flexible Membran dichtet also den Ringspalt zwischen dem verschiebbaren Druckstück einerseits und der Innenwand des Ventilraums ab. Dies hat zur Folge, dass eine Auslenkung der Membran durch einen Druckunterschied zwischen den beiden Seiten der Membran zu einer axialen Verschiebung des Druckstücks und damit auch zu einer entsprechenden Verschiebung des Mischers führt. Darüber hinaus hat diese Anordnung auch zur Folge, dass eine Verschiebung des Druckstücks durch den Ventilantrieb zu einer entsprechenden axialen Auslenkung der flexiblen Membran führt.

Weiterhin ist zu erwähnen, dass das erfindungsgemäße Beschichtungsmittelventil vorzugsweise zwei Beschichtungsmitteleinlässe aufweist, um die beiden Beschichtungsmittelkomponenten (z. B. Stammlack und Härter) zuzuführen, wobei die beiden Beschichtungsmitteleinlässe vorzugsweise auf der dem Ventilantrieb abgewandten Seite der Membran in den Ventilraum münden, d. h. auf der dem Mischer zugewandten Seite der Membran. Dies bietet den Vorteil, dass die Membran den Ventilantrieb gegenüber dem beschichtungsmittelgefüllten Ventilraum abdichtet. Die Membran verhindert also, dass das Beschichtungsmittelgemisch aus dem Ventilraum in den Ventilantrieb eindringen kann. Dies ist vorteilhaft, weil das Beschichtungsmittelgemisch ansonsten in dem Ventilantrieb aushärten könnte, was zu einem Bauteilversagen führen würde.

Darüber hinaus ermöglicht die Abdichtung mittels der Membran einen Verzicht auf eine separate Abdichtung des beschichtungsmittelgefüllten Ventilraums gegenüber dem Ventilantrieb. Die Erfindung ist jedoch nicht beschränkt auf Beschichtungsmittelventile ohne eine solche schleifende Dichtung. Vielmehr besteht im Rahmen der Erfindung auch die Möglichkeit, dass zusätzlich zu der Abdichtung durch die Membran eine separate Dichtung vorgesehen ist, die den beschichtungsmittelgefüllten Ventilraum gegenüber dem Ventilantrieb abdichtet, um zu verhindern, dass das Beschichtungsmittelgemisch in den Ventilantrieb eindringt.

In dem bevorzugten Ausführungsbeispiel der Erfindung weist der Ventilantrieb einen verschiebbaren Kolben auf, der auf die Ventilnadel wirkt, um die Ventilnadel zu verschieben. Darüber hinaus weist der Ventilantrieb vorzugsweise einen Steuerlufteinlass auf, um Steuerluft zuzuführen, wobei die Steuerluft auf den Kolben wirkt, um den Kolben und damit auch die Ventilnadel zu verschieben. Ferner ist vorzugsweise eine Ventilfeder vorgesehen, die mit einer Federkraft auf den Kolben oder die Ventilnadel wirkt, wobei die Federkraft der Ventilfeder in der Schließstellung und in der Öffnungsstellung vorzugsweise zwischen 80 N und 100 N liegt.

Hierbei ist zu erwähnen, dass die Ventilfeder die Ventilnadel vorzugsweise in die Schließstellung drückt, während die Steuerluft die Ventilnadel über den Kolben vorzugsweise in Richtung der Öffnungsstellung drückt. Die Ventilfeder und der Ventilkopf sind deshalb vorzugsweise auf gegenüber liegenden Seiten des Kolbens angeordnet.

Weiterhin ist zu erwähnen, dass der Kolben vorzugsweise einen relativ großen Kolbendurchmesser von mindestens 5 mm, 10 mm, 15 mm, 19 mm oder sogar mindestens 25 mm aufweist, um beim Bewegen der Ventilnadel in die Öffnungsstellung eine große Öffnungskraft zu erzeugen. So muss das Beschichtungsmittelventil auch dann sicher öffnen können, wenn der Ventilkopf in dem Ventilsitz fest sitzt, wozu eine ausreichend große Öffnungskraft erforderlich ist. Diese ausreichend große Öffnungskraft wird durch einen entsprechend großen Kolbendurchmesser und eine entsprechend große Kolbenwirkungsfläche erreicht. Die große Kolbenfläche ermöglicht wiederum den Betrieb mit einem Steuerluftdruck von weniger als 6 bar, insbesondere mit einem Steuerluftdruck von 5,5 bar. Dies ist vorteilhaft, weil die Steuerluft auf diese Weise aus einem üblichen 6-bar-Druckluftnetz bezogen werden kann, das in Lackieranlagen meist ohnehin zur Verfügung steht, so dass auf eine separate Steuerluftversorgung verzichtet werden kann.

Weiterhin ist zu erwähnen, dass der Kolben vorzugsweise einen kreisförmigen Querschnitt aufweist, wobei alternativ auch ein ovaler Querschnitt des Kolbens möglich ist.

Ferner ist zu erwähnen, dass die Ventilfeder die Ventilnadel mit einer bestimmten Schließkraft in Richtung der Schließstellung drückt. Der pneumatische Ventilantrieb drückt die Ventilnadel dagegen bei einer pneumatischen Ansteuerung mit einer bestimmten Öffnungskraft in Richtung der Öffnungsstellung. Die Öffnungskraft sollte hierbei um einen bestimmten Öffnungskraftüberschuss größer sein als die Schließkraft, um das Nadelventil öffnen zu können, wenn der Ventilkopf an dem Ventilsitz anhaftet. Der vorstehend erwähnte Öffnungskraftüberschuss ist vorzugsweise größer als 20 N, 40 N, 60 N, 80 N, 100 N, 120 N oder sogar größer als 130 N.

Darüber hinaus weist das erfindungsgemäße Beschichtungsmittelventil - wie bereits erwähnt - eine automatische Druckentlastung auf, wenn der eingangsseitige Beschichtungsmitteldruck zu groß wird. Dadurch wird verhindert, dass stromaufwärts vor dem erfindungsgemäßen Beschichtungsmittelventil aufgrund eines Überdrucks Schäden oder Betriebsstörungen auftreten. Diese Druckentlastung wird dadurch erreicht, dass der Beschichtungsmitteldruck in dem Ventilraum stromabwärts hinter der Membran auf die Membran und damit auch auf das Druckstück wirkt, wodurch das Druckstück und damit auch die Ventilnadel in Richtung der Öffnungsstellung gedrückt wird. Hierbei ist die Kraft der Ventilfeder zu überwinden, die die Ventilnadel in Richtung der Schließstellung drückt. Der Membrandurchmesser muss deshalb entsprechend den gewünschten Druckverhältnissen auf die Federkraft abgestimmt sein, damit das Beschichtungsmittelventil bei dem gewünschten Öffnungsdruck des Beschichtungsmittels öffnet. Vorzugsweise weist die Membran deshalb einen Membrandurchmesser von mindestens 3 mm, 6 mm oder 9 mm und/oder höchstens 40 mm, 20 mm oder 11 mm auf. Weiterhin ist zu erwähnen, dass der Öffnungsdruck des Beschichtungsmittels vorzugsweise mindestens 8 bar, 12 bar oder 14 bar und/oder höchstens 22e bar, 18 bar oder 16 bar beträgt. In dem bevorzugten Ausführungsbeispiel der Erfindung öffnet das Beschichtungsmittelventil dagegen bei einem Beschichtungsmitteldruck über 15 bar.

Es wurde bereits vorstehend kurz erwähnt, dass der Ventilkopf den Ventilsitz wahlweise abdichtet oder frei gibt. Hierbei ist zu erwähnen, dass sich der Ventilsitz vorzugsweise mit einem bestimmten Sitzwinkel in Strömungsrichtung verengt, wie sich auch der Ventilkopf mit einem bestimmten Kopfwinkel in Strömungsrichtung verjüngt. Vorzugsweise ist der Sitzwinkel des Ventilsitzes im Wesentlichen gleich dem Kopfwinkel des Ventilkopfs. Beispielsweise können Sitzwinkel und Kopfwinkel im Bereich von 35°-50° liegen.

In dem bevorzugten Ausführungsbeispiel der Erfindung ist in den Ventilkopf ein zusätzliches Dichtelement eingesetzt, um den Ventilsitz in der Schließstellung abzudichten. Vorzugsweise besteht dieses Dichtelement aus einem anderen Material als der Ventilkopf. Beispielsweise kann der Ventilkopf aus Titan bestehen, wohingegen das zusätzliche Dichtelement aus Perfluorkautschuk (FFKM) besteht. Vorzugsweise besteht der Ventilkopf also aus einem starren Material, wohingegen das zusätzliche Dichtelement aus einem elastischen Material besteht, wobei das Dichtelement wahlweise in den Ventilkopf eingesetzt oder an dem Ventilkopf anvulkanisiert ist.

Beispielsweise kann das Dichtelement ein Dichtring sein, der in eine Ringnut in der Mantelfläche des Ventilkopfs eingesetzt ist. Bei einer konischen Anordnung von Ventilkopf und Ventilsitz bildet die konische Mantelfläche des Ventilkopfs stromaufwärts vor dem Dichtelement vorzugsweise eine ringförmig umlaufende Abstützfläche, die sich an dem Dichtsitz abstützt. In der Schließstellung des Beschichtungsmittelventils liegt der Ventilkopf also mit seiner Abstützfläche an dem Dichtsitz an und begrenzt dadurch in axialer Richtung die Ventilbewegung. Dadurch wird auch die Kompression des zusätzlichen Dichtelements in der Ringnut begrenzt, was der Lebensdauer des Dichtelements zuträglich ist.

Hierbei kann jedoch das Problem auftreten, dass sich in dem Spalt zwischen Ventilkopf und Ventilsitz stromabwärts hinter dem Dichtelement Beschichtungsmittelgemisch ansammelt und dort aushärtet, wobei dieser Bereich schwer zu spülen ist, da das Spülmittel nur schwer an dem Dichtelement vorbeiströmen kann. Zur Lösung dieses Problems können in der Abstützfläche des Ventilkopfs axial verlaufende Spülnuten vorgesehen sein, durch die das Spülmittel hindurchtreten kann.

Ferner beansprucht die Erfindung auch Schutz für einen kompletten Rotationszerstäuber mit einem solchen Beschichtungsmittelventil, das beispielsweise als Hauptnadelventil dienen kann. Die Einzelheiten eines solchen Rotationszerstäubers sind an sich für den Fachmann bekannt und beispielsweise auch in der bereits eingangs zitierten Patentanmeldung DE 10 2010 019 771 A1 beschrieben.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Längsschnittansicht einer erfindungsgemäßen Mischeranordnung, die die Funktion eines Mischers und die Funktion eines Hauptnadelventils vereinigt.
- Figur 2: eine Vergrößerung aus Figur 1 im Bereich des Ventilantriebs,
- Figur 3: eine Vergrößerung aus Figur 3 im Bereich der Farbdüse,
- Figur 4: eine Seitenansicht eines Gittermischers, der gleichzeitig eine Ventilnadel bildet,
- Figur 5: eine Darstellung von Ventilkopf und Ventilsitz.
- Figur 6: eine Abwandlung von Figur 4 in Form eines Wendelmischers.

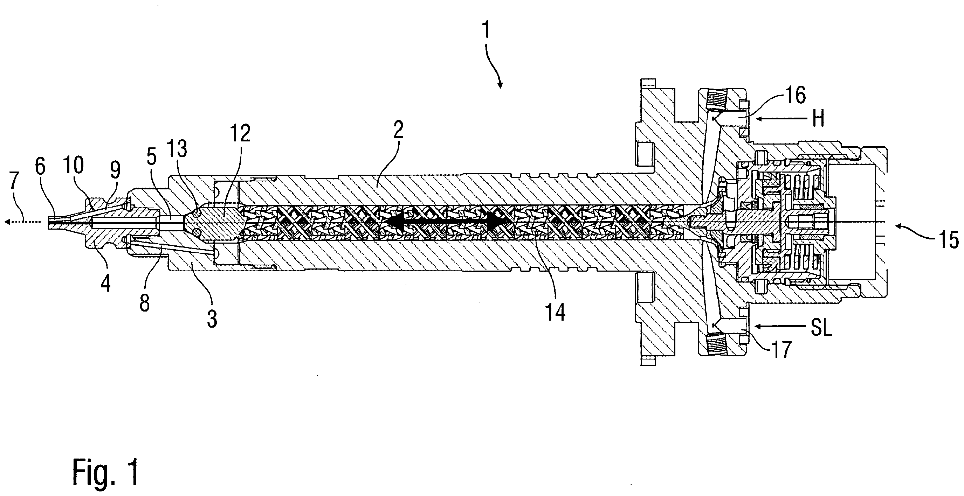

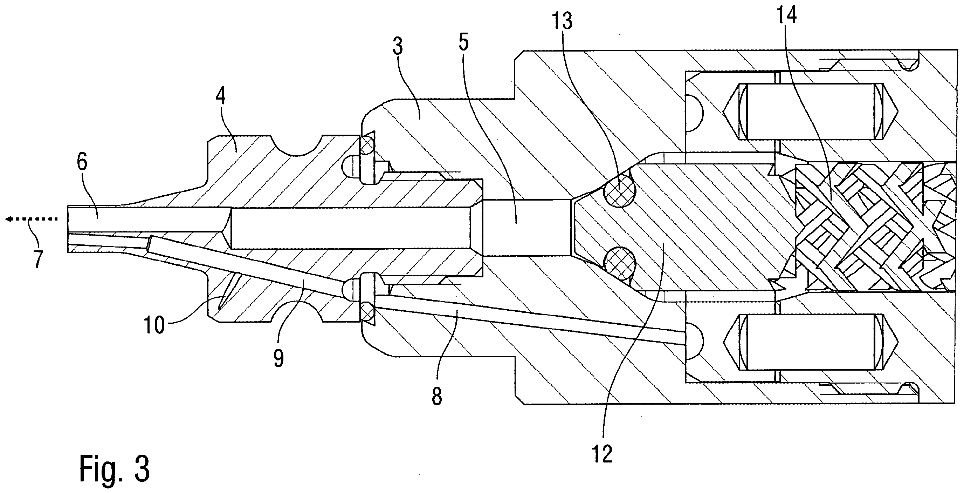

Die Figuren 1-5 zeigen verschiedene Ansichten einer Mischeranordnung 1, die in einem Rotationszerstäuber eingesetzt werden kann, um Stammlack und Härter miteinander zu vermischen, wobei die Mischeranordnung 1 zusätzlich auch die Funktion eines Hauptnadelventils erfüllt, wie noch ausführlich beschrieben wird.

Hinsichtlich der Details der Anordnung der Mischeranordnung in dem Rotationszerstäuber wird auf die bereits eingangs zitierte Patentanmeldung DE 10 2010 019 771 A1 verwiesen, die einen ähnlich aufgebauten Rotationszerstäuber beschreibt. Die Mischeranordnung 1 umfasst ein Farbrohr 2 mit einem aufgeschraubten Kopfteil 3 und einer in das Kopfteil 3 eingeschraubten Farbdüse 4.

Die Farbdüse 4 ist detailliert in DE 10 2009 037 604 A1 beschrieben.

In dem Kopfteil 3 des Farbrohrs 2 verläuft ein Farbkanal 5, der seine Fortsetzung in einem Farbkanal 6 in der Farbdüse 4 findet. Bei einer Lackapplikation tritt also aus dem Farbkanal 6 der Farbdüse 4 ein Beschichtungsmittelstrahl 7 aus. Weiterhin ist zu erwähnen, dass in dem Kopfteil 3 des Farbrohrs 2 ein Spülmittelkanal 8 verläuft, der einen Spülmittelkanal 9 in der Farbdüse 4 speist. Von dem Spülmittelkanal 9 in der Farbdüse 4 zweigt ein Spülmittelkanal 10 ab, wie in DE 10 2009 037 604 A1 ausführlich beschrieben ist.

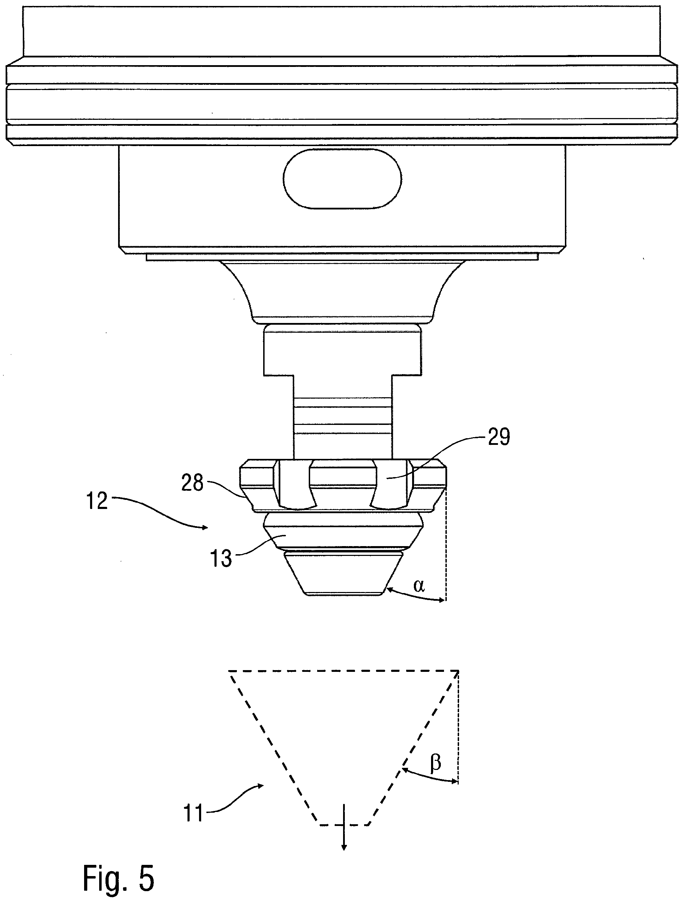

In dem Kopfteil 3 des Farbrohrs 2 befindet sich ein Ventilsitz 11, der sich in Strömungsrichtung mit einem Sitzwinkel β konisch verengt und in Figur 5 schematisch dargestellt ist.

Weiterhin umfasst die Mischeranordnung 1 einen Ventilkopf 12, der in Richtung des Doppelpfeils verschiebbar ist und sich an seinem distalen Ende mit einem Kopfwinkel α konisch verjüngt. In die konische Mantelfläche des Ventilkopfs 12 ist ein Dichtring 13 eingelassen, um den Ventilsitz 11 in einer Schließstellung abzudichten, wie noch detailliert beschrieben wird.

Darüber hinaus enthält die Mischeranordnung 1 einen Gittermischer 14, der in dem Farbrohr 2 angeordnet ist und in Pfeilrichtung verschiebbar ist. An seinem distalen Ende ist der Gittermischer 14 mit dem Ventilkopf 12 verbunden. An seinem proximalen Ende ist der Gittermischer 14 dagegen mit einem Ventilantrieb 15 verbunden. Der Ventilantrieb 15 wirkt also auf den verschiebbaren Gittermischer 14, der mit dem Ventilkopf 12 verbunden ist, so dass der Gittermischer 14 auch die Funktion einer Ventilnadel übernimmt.

Weiterhin umfasst die Mischeranordnung 1 eine Härter-Zuleitung 16 zur Zuführung eines Härters H und eine Stammlack-Zuleitung 17 zur Zuleitung eines Stammlacks SL. Die Härter-Zuleitung 16 und die Stammlack-Zuleitung 17 münden hierbei in einen Ventilraum 18 stromabwärts hinter einer Membran 19, wobei die Membran 19 den Ventilraum 18 gegenüber dem Ventilantrieb 15 abdichtet, wie noch detailliert beschrieben wird. Der Härter H und der Stammlack SL strömen dann aus dem Ventilraum 18 durch den Gittermischer 14 und werden dort miteinander gemischt.

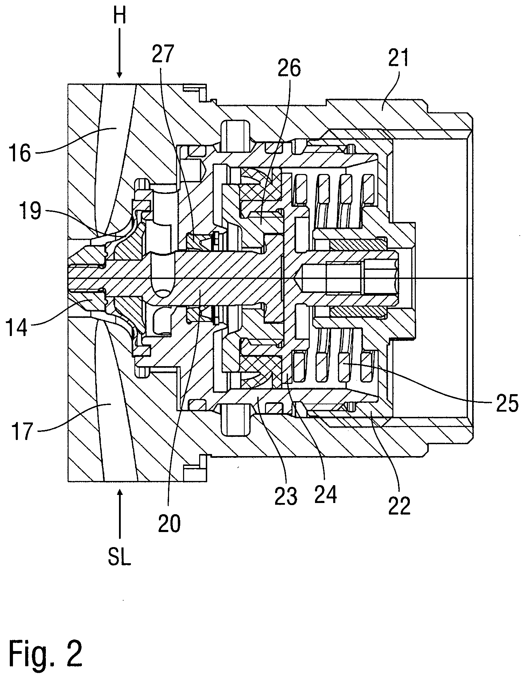

Aus der Detaildarstellung des Ventilantriebs 15 in Figur 2 ist ersichtlich, dass der Ventilantrieb 15 ein Druckstück 20 aufweist, das an seinem distalen Ende mit dem Gittermischer 14 verbunden ist und somit den Gittermischer 14 verschiebt.

Weiterhin umfasst der Ventilantrieb 15 einen Gehäusekörper 21 mit einem äußeren Gehäuseeinsatz 22 und einem inneren Gehäuseeinsatz 23. In dem inneren Gehäuseeinsatz 23 ist ein Ventilkolben 24 verschiebbar angeordnet, wobei sich eine Ventilfeder 25 einerseits an dem äußeren Gehäuseeinsatz 22 und andererseits an dem Ventilkolben 24 abstützt. Die Ventilfeder 25 drückt den Ventilkolben 24 also in den Zeichnungen gemäß den Figuren 1 und 2 nach links, d. h. in eine Schließstellung. Die Bewegung des Ventilkolbens 24 wirkt über das Druckstück 20 und den Gittermischer 14 auf den Ventilkopf 12, der den Ventilsitz 11 entweder freigibt oder verschließt.

Das Druckstück 20 ist hierbei über einen Kolbeneinsatz 26 mit dem Ventilkolben 24 verbunden. Darüber hinaus umgibt das Druckstück 20 hierbei ein zusätzlicher Dichtungsring 27.

Weiterhin ist zu erwähnen, dass der Ventilkolben 24 auf der linken Seite in den Figuren 1 und 2 mit Steuerluft beaufschlagt werden kann, die über einen nicht dargestellten Steuerlufteinlass zugeführt wird. Bei einer entsprechenden Druckbeaufschlagung durch die Steuerluft drückt die Steuerluft den Ventilkolben 24 also in den Zeichnungen gemäß den Figuren 1 und 2 nach rechts, d. h. in eine Öffnungsstellung.

Die Ventilfeder 25 drückt den Ventilkopf 12 also über das Druckstück 20 und den Gittermischer 14 in die Schließstellung, um das Beschichtungsmittelventil zu schließen. Die auf den Ventilkolben 24 wirkende Steuerluft drückt den Ventilkopf 12 dagegen über das Druckstück 20 und den Gittermischer 14 in die Öffnungsstellung.

Hierbei ist nochmals zu betonen, dass der Gittermischer 14 zwei Funktionen hat. Zum einen mischt der Gittermischer 14 den Härter H mit dem Stammlack SL, was an sich aus dem Stand der Technik bekannt ist. Darüber hinaus dient der Gittermischer 14 hierbei aber auch als Ventilnadel und überträgt die Antriebsbewegung des Ventilantriebs 15 auf den Ventilkopf 12. Dies verringert den Platzbedarf für die Ventilnadel und den Gittermischer 14, da beide Funktionen in einem Bauteil vereinigt sind. Dadurch können in dem Farbrohr mehrere Gittermischer 14 angeordnet sein. Alternativ besteht die Möglichkeit, dass ein Farbrohr 2 mit einem kleineren Querschnitt verwendet wird.

Aus Figur 5 ist weiterhin ersichtlich, dass der Dichtring 13 in dem Ventilkopf 12 in eine Ringnut in dem Ventilkopf 12 eingesetzt ist. Die konische Mantelfläche 28 des Ventilkopfs 12 stromaufwärts vor dem Dichtring 13 bildet hierbei eine starre Abstützfläche, die in der Schließstellung des Ventilkopfs 12 an der konischen Innenwand des Ventilsitzes 11 anliegt und dadurch die Kompression des Dichtrings 13 begrenzt, was der Lebensdauer des Dichtrings 13 zuträglich ist.

Ferner zeigt Figur 5, dass der Ventilkopf 12 in der konischen Mantelfläche 28 (Abstützfläche) axial verlaufende Spülnuten 29 aufweist, durch die im geschlossenen Ventilzustand Spülmittel hindurchströmen kann, um den Bereich stromabwärts hinter dem Dichtring 13 zu spülen.

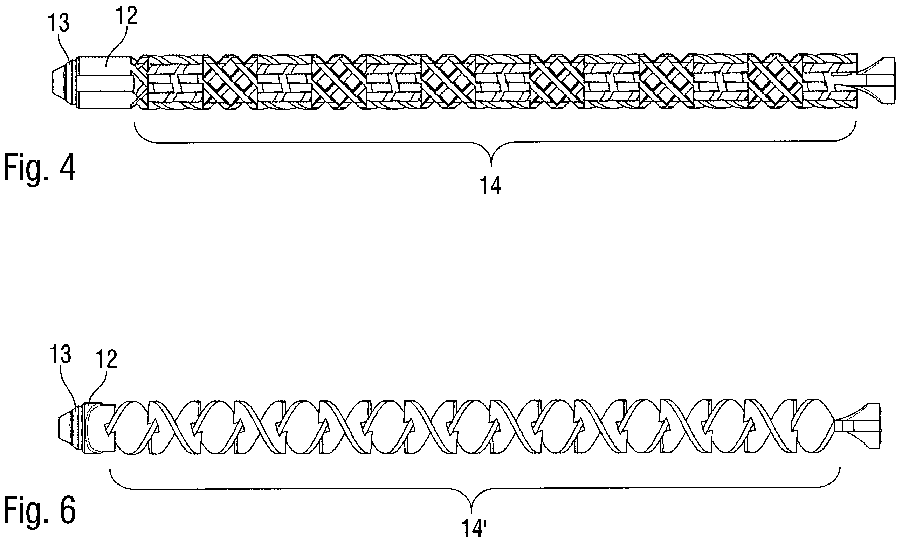

Figur 6 zeigt eine Abwandlung eines Wendelmischers 14' anstelle des Gittermischers 14, wobei derartige Wendelmischer 14' auch als Kenics®-Mischer bekannt sind und deshalb nicht mehr beschrieben werden müssen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den Merkmalen des Hauptanspruchs. Die Erfindung kann also auch realisiert werden ohne den erfindungsgemäßen Gedanken eines bifunktionalen Bauelements, das die Funktionen eines Mischers und einer Ventilnadel vereinigt.

### Bezugszeichenliste:

- 1: Mischeranordnung
- 2: Farbrohr
- 3: Kopfteil des Farbrohrs
- 4: Farbdüse
- 5: Farbkanal in dem Kopfteil des Farbrohrs
- 6: Farbkanal in der Farbdüse
- 7: Beschichtungsmittelstrahl
- 8: Spülmittelkanal in dem Kopfteil des Farbrohrs
- 9: Spülmittelkanal in der Farbdüse
- 10: Spülmittelkanal in der Farbdüse
- 11: Ventilsitz
- 12: Ventilkopf
- 13: Dichtring im Ventilkopf
- 14: Gittermischer
- 14': Wendelmischer
- 15: Ventilantrieb
- 16: Härter-Zuleitung
- 17: Stammlack-Zuleitung
- 18: Ventilraum
- 19: Membran
- 20: Druckstück
- 21: Gehäusekörper
- 22: Äußerer Gehäuseeinsatz
- 23: Innerer Gehäuseeinsatz
- 24: Ventilkolben
- 25: Ventilfeder
- 26: Kolbeneinsatz zur Verbindung mit dem Druckstück
- 27: Dichtungsring um das Druckstück
- 28: Konische Mantelfläche des Ventilkopfs stromaufwärts vor dem Dichtring
- 29: Spülnuten
- α: Kopfwinkel
- β: Sitzwinkel
- H: Härter
- SL: Stammlack

## Patentansprüche

1. Beschichtungsmittelventil (1) zur Steuerung eines Fluidstroms eines Beschichtungsmittelgemischs aus zwei Beschichtungsmittelkomponenten (H, SL), insbesondere eines Zweikomponentenlacks aus einem Stammlack (SL) und einem Härter (H), mit
a) einem Ventilsitz (11),
b) einem verschiebbaren Ventilkopf (12),
b1) wobei der Ventilkopf (12) in einer Schließstellung den Ventilsitz (11) abdichtet und dadurch den Fluidstrom sperrt,
b2) wohingegen der Ventilkopf (12) in einer Öffnungsstellung den Ventilsitz (11) und dadurch auch den Fluidstrom freigibt,
c) einem Ventilantrieb (15) zum Verschieben des Ventilkopfs (12),
d) einer verschiebbaren Ventilnadel (14, 20), die den Ventilantrieb (15) mit dem Ventilkopf (12) verbindet und den Ventilkopf (12) entsprechend dem Ventilantrieb (15) bewegt,
e) einer flexiblen Membran (19), die in einem Ventilraum (18) angebracht ist, wobei eine Auslenkung der Membran 819) zu einer entsprechenden Verschiebung der Ventilnadel (14, 20) führt,
f) einem ersten Beschichtungsmitteleinlass (16) zur Zuführung der ersten Beschichtungsmittelkomponente (H), und
g) einem zweiten Beschichtungsmitteleinlass (17) zur Zuführung der zweiten Beschichtungsmittelkomponente (SL),
h) wobei der erste Beschichtungsmitteleinlass (16) und/oder der zweite Beschichtungsmitteleinlass (17) auf der dem Ventilantrieb (15) abgewandten Seite der Membran (19) in den Ventilraum (18) mündet, und
i) der Beschichtungsmitteldruck in dem Ventilraum (18) stromabwärts hinter der Membran (19) ab einem bestimmten Öffnungsdruck die Ventilnadel (14, 20) über die Membran (19) aus der Schließstellung in die Öffnungsstellung drückt,
**dadurch gekennzeichnet,**
j) dass die Ventilnadel (14, 20) mindestens teilweise durch einen Mischer (14; 14') gebildet wird, der die Beschichtungsmittelkomponenten (H, SL) miteinander mischt.

2. Beschichtungsmittelventil (1) nach Anspruch 1, **dadurch gekennzeichnet, dass** der Mischer (14; 14') ein statischer Mischer (14; 14') ist, insbesondere ein Gittermischer (14) oder ein Wendelmischer (14').

3. Beschichtungsmittelventil (1) nach einem der vorhergehenden Ansprüche, **dadurch gekennzeichnet,**
a) **dass** das Beschichtungsmittelventil (1) ein hohles Farbrohr (2) aufweist zur Montage in einer hohlen Turbinenwelle eines Rotationszerstäubers, wobei das Farbrohr (2) und die Turbinenwelle im montierten Zustand koaxial verlaufen, und
b) **dass** die Ventilnadel (14, 20) in Form des Mischers (14; 14') in dem Farbrohr (2) angeordnet ist, oder
c) **dass** in dem Farbrohr (2) mehrere Ventilnadeln angeordnet sind, die jeweils einen Mischer (14; 14') bilden.

4. Beschichtungsmittelventil (1) nach einem der vorhergehenden Ansprüche, **dadurch gekennzeichnet,**
a) **dass** das Beschichtungsmittelventil (1) ein verschiebbares Druckstück (20) aufweist, das an seinem distalen Ende mit dem verschiebbaren Mischer (14; 14') verbunden ist und diesen verschiebt,
b) **dass** das Druckstück (20) verschiebbar angeordnet ist, und
c) **dass** die Membran (19) mittig dichtend an dem Druckstück (20) befestigt ist, während die Membran (19) mit ihrem Umfangsrand dichtend an der Innenwand des Ventilraums (18) befestigt ist.

5. Beschichtungsmittelventil (1) nach Anspruch 4,
**gekennzeichnet durch**
a) dass der erste Beschichtungsmitteleinlass (16) auf der dem Ventilantrieb (15) abgewandten Seite der Membran (19) in den Ventilraum (18) mündet, so dass die Membran (19) den Ventilantrieb (15) gegenüber dem Mischer (14; 14') abdichtet, und
b) dass der zweite Beschichtungsmitteleinlass (17) auf der dem Ventilantrieb (15) abgewandten Seite der Membran (19) in den Ventilraum (18) mündet, so dass die Membran (19) den Ventilantrieb (15) gegenüber dem Mischer (14; 14') abdichtet.

6. Beschichtungsmittelventil (1) nach einem der vorhergehenden Ansprüche, **dadurch gekennzeichnet, dass** der Ventilantrieb (15) folgendes aufweist:
a) einen verschiebbaren Kolben (24), der auf die Ventilnadel (14, 20) wirkt, um die Ventilnadel (14, 20) zu verschieben,
b) einen Steuerlufteinlass zur Zuführung einer Steuerluft, wobei die Steuerluft auf den Kolben (24) wirkt, um den Kolben (24) und damit auch die Ventilnadel (14, 20) zu verschieben,
c) eine Ventilfeder (25), die mit einer Federkraft auf den Kolben (24) oder die Ventilnadel (14, 20) wirkt,
d) wobei die Federkraft der Ventilfeder (25) in der Schließstellung und in der Öffnungsstellung vorzugsweise mindestens 20 N, 40 N oder 80 N und/oder höchstens 400 N, 200N oder 100 N beträgt.

7. Beschichtungsmittelventil (1) nach Anspruch 6,
**dadurch gekennzeichnet,**
a) **dass** die Ventilfeder (25) die Ventilnadel (14, 20) in Richtung der Schließstellung drückt, und
b) **dass** die Steuerluft die Ventilnadel (14, 20) über den Kolben (24) in Richtung der Öffnungsstellung drückt,
c) **dass** die Ventilfeder (25) und der Ventilkopf (12) vorzugsweise auf gegenüber liegenden Seiten des Kolbens (24) angeordnet ist,
d) **dass** der Kolben (24) vorzugsweise einen Kolbendurchmesser von mindestens 5 mm, 10 mm, 15 mm, 19 mm oder 25 mm aufweist, um beim Bewegen der Ventilnadel (14, 20) in die Öffnungsstellung eine große Öffnungskraft zu erzeugen,
e) **dass** die Steuerluft zum Bewegen der Ventilnadel (14, 20) in die Öffnungsstellung vorzugsweise einen Steuerluftdruck von weniger als 6 bar, insbesondere 5,5 bar, benötigt, so dass die Steuerluft aus einem üblichen 6-bar-Druckluftnetz bezogen werden kann,
f) **dass** der Kolben (24) vorzugsweise einen kreisförmigen Querschnitt oder alternativ einen ovalen Querschnitt aufweist.

8. Beschichtungsmittelventil (1) nach Anspruch 7,
**dadurch gekennzeichnet,**
a) **dass** die Ventilfeder (25) die Ventilnadel (14, 20) mit einer bestimmten Schließkraft in Richtung der Schließstellung drückt,
b) **dass** der pneumatische Ventilantrieb (15) bei einer pneumatischen Ansteuerung die Ventilnadel (14, 20) mit einer bestimmten Öffnungskraft in Richtung der Öffnungsstellung drückt,
c) **dass** die Öffnungskraft um einen bestimmten Öffnungskraftüberschuss größer ist als die Schließkraft, um das Beschichtungsmittelventil öffnen zu können, wenn der Ventilkopf (12) an dem Ventilsitz (11) anhaftet, und/oder
d) **dass** der Öffnungskraftüberschuss vorzugsweise größer ist als 20 N, 40 N, 60 N, 80 N, 100 N, 120 N oder 130 N.

9. Beschichtungsmittelventil (1) nach einem der vorhergehenden Ansprüche, **dadurch gekennzeichnet,**
a) **dass** die Membran (19) einen Membrandurchmesser von mindestens 3 mm, 6 mm oder 9 mm und/oder höchsten 40 mm, 20 mm oder 11 mm aufweist, insbesondere 10 mm, und/oder
b) **dass** der Öffnungsdruck des Beschichtungsmittels mindestens 8 bar, 12 bar oder 14 bar und/oder höchstens 22 bar, 18 bar oder 16 bar beträgt.

10. Beschichtungsmittelventil (1) nach einem der vorhergehenden Ansprüche, **dadurch gekennzeichnet,**
a) **dass** sich der Ventilsitz (11) mit einem bestimmten Sitzwinkel (β) in Strömungsrichtung verengt,
b) **dass** sich der Ventilkopf (12) mit einem bestimmten Kopfwinkel (α) in Strömungsrichtung verengt,
c) **dass** der Sitzwinkel (β) im Wesentlichen gleich dem Kopfwinkel (α) ist,
d) **dass** der Sitzwinkel (β) vorzugsweise größer ist als 20°, 30° oder 35° und/oder kleiner als 70°, 60° oder 50°,
e) **dass** der Kopfwinkel (α) vorzugsweise größer ist als 20°, 30° oder 35° und/oder kleiner als 70°, 60° oder 50°,

11. Beschichtungsmittelventil (1) nach einem der vorhergehenden Ansprüche, **dadurch gekennzeichnet,**
a) **dass** in den Ventilkopf (12) der Ventilnadel (14, 20) ein zusätzliches Dichtelement (13) eingesetzt ist, um den Ventilsitz (11) in der Schließstellung abzudichten, und/oder
b) **dass** das Dichtelement (13) aus einem anderen Material besteht als der Ventilkopf (12) der Ventilnadel (14, 20), und/oder
c) **dass** das Dichtelement (13) aus einem elastischen Material besteht, und/oder
d) **dass** das Dichtelement (13) aus Perfluorkautschuk besteht, und/oder
e) **dass** das Dichtelement (13) an den Ventilkopf (12) anvulkanisiert ist, und/oder
f) **dass** das Dichtelement (13) ein Dichtring ist, der in eine Ringnut in dem Ventilkopf (12) eingesetzt ist, und/oder
g) **dass** der Ventilkopf (12) aus Titan besteht.

12. Beschichtungsmittelventil (1) nach Anspruch 11,
**dadurch gekennzeichnet,**
a) **dass** sich der Ventilkopf (12) in Strömungsrichtung im Wesentlichen konisch verjüngt,
b) **dass** sich der Ventilsitz (11) in Strömungsrichtung im Wesentlichen konisch verjüngt,
c) **dass** der Ventilkopf (12) in seiner konischen Mantelfläche eine Ringnut aufweist, in die das Dichtelement (13) eingesetzt,
d) **dass** die konische Mantelfläche des Ventilkopfs (12) stromaufwärts vor dem Dichtelement (13) eine ringförmig umlaufende Abstützfläche (28) bildet und sich mit der Abstützfläche (28) an dem Ventilsitz (11) abstützt,
e) **dass** der Ventilkopf (12) in der Abstützfläche (28) mindestens eine axial verlaufende Spülnut (29) aufweist, die in der Schließstellung der Ventilnadel (14, 20) eine Durchleitung von Spülmittel aus dem Ventilraum (18) hin zu dem Dichtelement (13) ermöglicht,
f) **dass** die Spülnut (29) vorzugsweise eine Nutbreite von mindestens 1 mm und höchsten 2 mm aufweist.

13. Beschichtungsmittelventil (1) nach einem der Ansprüche 11 bis 12, **dadurch gekennzeichnet,**
a) **dass** der Ventilkopf (12) einen starren Anschlag (28) aufweist und sich in der Schließstellung mit dem Anschlag (28) an dem Ventilsitz (11) abstützt, insbesondere mit der ringförmig umlaufenden konischen Abstützfläche (28), und
b) **dass** das Dichtelement in dem Ventilkopf (12) in der Schließstellung der Ventilnadel (14, 20) einem Druck ausgesetzt ist, der unabhängig ist von der auf die Ventilnadel (14, 20) wirkenden Schließkraft, da sich der Ventilkopf (12) mit seinem starren Anschlag (28) an dem Ventilsitz (11) abstützt.

14. Rotationszerstäuber zur Applikation eines Sprühstrahls des Beschichtungsmittels, mit
a) einer Turbine mit einer hohlen Turbinenwelle zur Montage eines Glockentellers am distalen Ende der Turbinenwelle,
b) einem Beschichtungsmittelventil (1) nach einem der vorhergehenden Ansprüche, wobei das Farbrohr (2) in der hohlen Turbinenwelle verläuft.

## Claims

1. A coating agent valve (1) for controlling a flow of fluid of a coating agent mixture consisting of two coating agent components (H, SL), in particular a two-component paint consisting of a master batch (SL) and a hardener (H), with
a) a valve seat (11),
b) a displaceable valve head (12),
b1) wherein the valve head (12) in a closed position seals off the valve seat (11) and thereby blocks the flow of fluid,
b2) whereas the valve head (12) in an open position releases the valve seat (11) and thereby also the flow of fluid,
c) a valve drive (15) for displacing the valve head (12),
d) a displaceable valve needle (14, 20) which connects the valve drive (15) to the valve head (12) and moves the valve head (12) in correspondence with the valve drive (15),
e) a flexible membrane (19) which is fastened in a valve space (18), a displacement of the membrane (19) resulting in a corresponding displacement of the valve needle (14, 20),
f) a first coating agent inlet (16) for supplying the first coating agent component (H), and
g) a second coating agent inlet (17) for supplying the second coating agent component (SL),
h) wherein the first coating agent inlet (16) and/or the second coating agent inlet (17) opens into the valve space (18) on the side of the membrane (19) remote from the valve drive (15), and
i) the coating agent pressure in the valve space (18) downstream from the membrane (19) from a certain opening pressure onwards presses the valve needle (14, 20) via the membrane (19) out of the closed position into the open position,
**characterised in that**
j) the valve needle (14, 20) is formed at least in part by a mixer (14; 14') which mixes the coating agent components (H, SL) together.

2. A coating agent valve (1) according to Claim 1, **characterised in that** the mixer (14; 14') is a static mixer (14; 14'), in particular a lattice mixer (14) or a spiral mixer (14').

3. A coating agent valve (1) according to one of the preceding Claims, **characterised in that**
a) the coating agent valve (1) has a hollow paint tube (2) for mounting in a hollow turbine shaft of a rotary atomiser, the paint tube (2) and the turbine shaft in the mounted state extending coaxially, and
b) the valve needle (14, 20) is arranged in the paint tube (2) in the form of the mixer (14; 14'), or
c) a plurality of valve needles are arranged in the paint tube (2), each of which needles forms a mixer (14; 14').

4. A coating agent valve (1) according to one of the preceding claims, **characterised in that**
a) the coating agent valve (1) has a displaceable thrust piece (20) which is connected at its distal end to the displaceable mixer (14; 14') and displaces it,
b) the thrust piece (20) is arranged displaceably, and
c) the membrane (19) is fastened centrally in sealing manner on the thrust piece (20), whereas the membrane (19) is fastened with its peripheral edge in sealing manner on the inner wall of the valve space (18).

5. A coating agent valve (1) according to Claim 4,
**characterised by**
a) that the first coating agent inlet (16) opens into the valve space (18) on the side of the membrane (19) remote from the valve drive (15), so that the membrane (19) seals off the valve drive (15) from the mixer (14; 14'), and
b) that the second coating agent inlet (17) opens into the valve space (18) on the side of the membrane (19) remote from the valve drive (15), so that the membrane (19) seals off the valve drive (15) from the mixer (14; 14').

6. A coating agent valve (1) according to one of the preceding claims, **characterised in that** the valve drive (15) has the following:
a) a displaceable piston (24) which acts on the valve needle (14, 20) in order to displace the valve needle (14, 20),
b) a control-air inlet for supplying control air, the control air acting on the piston (24) in order to displace the piston (24) and hence also the valve needle (14, 20),
c) a valve spring (25) which acts with a spring force on the piston (24) or the valve needle (14, 20),
d) the spring force of the valve spring (25) in the closed position and in the open position being preferably at least 20 N, 40 N or 80 N and/or at most 400 N, 200N or 100 N.

7. A coating agent valve (1) according to Claim 6,
**characterised in that**
a) the valve spring (25) presses the valve needle (14, 20) in the direction of the closed position, and
b) the control air presses the valve needle (14, 20) via the piston (24) in the direction of the open position,
c) the valve spring (25) and the valve head (12) are preferably arranged on opposite sides of the piston (24),
d) the piston (24) preferably has a piston diameter of at least 5 mm, 10 mm, 15 mm, 19 mm or 25 mm, in order to generate a large opening force upon movement of the valve needle (14, 20) into the open position,
e) the control air for moving the valve needle (14, 20) into the open position preferably requires a control-air pressure of less than 6 bar, in particular 5.5 bar, so that the control air can be drawn from a conventional 6-bar compressed-air system,
f) the piston (24) preferably has a circular cross-section or alternatively an oval cross-section.

8. A coating agent valve (1) according to Claim 7,
**characterised in that**
a) the valve spring (25) presses the valve needle (14, 20) in the direction of the closed position with a certain closing force,
b) the pneumatic valve drive (15) in the event of pneumatic driving presses the valve needle (14, 20) with a certain opening force in the direction of the open position,
c) the opening force is greater by a certain opening force excess than the closing force, in order to be able to open the coating agent valve if the valve head (12) adheres to the valve seat (11), and/or
d) the opening force excess is preferably greater than 20 N, 40 N, 60 N, 80 N, 100 N, 120 N or 130 N.

9. A coating agent valve (1) according to one of the preceding claims, **characterised in that**
a) the membrane (19) has a membrane diameter of at least 3 mm, 6 mm or 9 mm and/or at most 40 mm, 20 mm or 11 mm, in particular 10 mm, and/or
b) the opening pressure of the coating agent is at least 8 bar, 12 bar or 14 bar and/or at most 22 bar, 18 bar or 16 bar.

10. A coating agent valve (1) according to one of the preceding claims, **characterised in that**
a) the valve seat (11) narrows in the direction of flow at a certain seat angle (β),
b) the valve head (12) narrows in the direction of flow at a certain head angle (α),
c) the seat angle (β) is substantially identical to the head angle (α),
d) the seat angle (β) is preferably greater than 20°, 30° or 35° and/or less than 70°, 60° or 50°,
e) the head angle (α) is preferably greater than 20°, 30° or 35° and/or less than 70°, 60° or 50°.

11. A coating agent valve (1) according to one of the preceding claims, **characterised in that**
a) an additional sealing element (13) is inserted into the valve head (12) of the valve needle (14, 20) in order to seal off the valve seat (11) in the closed position, and/or
b) the sealing element (13) consists of a different material than the valve head (12) of the valve needle (14, 20), and/or
c) the sealing element (13) consists of an elastic material, and/or
d) the sealing element (13) consists of perfluorinated rubber, and/or
e) the sealing element (13) is vulcanised onto the valve head (12), and/or
f) the sealing element (13) is a sealing ring which is inserted into an annular groove in the valve head (12), and/or
g) the valve head (12) consists of titanium.

12. A coating agent valve (1) according to Claim 11,
**characterised in that**
a) the valve head (12) tapers substantially conically in the direction of flow,
b) the valve seat (11) tapers substantially conically in the direction of flow,
c) the valve head (12) has an annular groove in its conical casing surface into which the sealing element (13) [is] inserted,
d) the conical casing surface of the valve head (12) upstream from the sealing element (13) forms an annular circumambient supporting surface (28) and is supported with the supporting surface (28) on the valve seat (11),
e) the valve head (12) has at least one axially extending flushing groove (29) in the supporting surface (28), which groove in the closed position of the valve needle (14, 20) allows flushing agent to be passed through out of the valve space (18) towards the sealing element (13),
f) the flushing groove (29) preferably has a groove width of at least 1 mm and at most 2 mm.

13. A coating agent valve (1) according to one of Claims 11 to 12, **characterised in that**
a) the valve head (12) has a rigid stop (28) and in the closed position is supported with the stop (28) on the valve seat (11), in particular with the annular circumambient conical supporting surface (28), and
b) the sealing element in the valve head (12) in the closed position of the valve needle (14, 20) is exposed to a pressure which is independent of the closing force acting on the valve needle (14, 20), since the valve head (12) is supported with its rigid stop (28) on the valve seat (11).

14. A rotary atomiser for applying a spray jet of the coating agent, with
a) a turbine with a hollow turbine shaft for mounting a bell cup on the distal end of the turbine shaft,
b) a coating agent valve (1) according to one of the preceding claims, the paint tube (2) extending in the hollow turbine shaft.

## Revendications

1. Soupape de produit de revêtement (1) pour le contrôle d'un écoulement de fluide d'un mélange de produit de revêtement constitué de deux composants de produit de revêtement (H, SL), plus particulièrement d'une peinture bi-composant constituée d'une peinture de base (SL) et d'un durcisseur (H), avec
a) un siège de soupape (11),
b) une tête de soupape mobile (12),
b1) la tête de soupape (12) étanchéifiant le siège de soupape (11) et donc bloquant également l'écoulement de fluide dans une position de fermeture,
b2) la tête de soupape (12) libérant le siège de soupape (11) et donc également l'écoulement de fluide dans une position d'ouverture,
c) un entraînement de soupape (15) pour le déplacement de la tête de soupape (12),
d) une aiguille de soupape mobile (14, 20) qui relie l'entraînement de soupape (15) avec la tête de soupape (12) et qui déplace la tête de soupape (12) en fonction de l'entraînement de soupape (15),
e) une membrane flexible (19), qui est montée dans un espace de soupape (18), une déviation de la membrane (19) conduisant à un déplacement correspondant de l'aiguille de soupape (14, 20),
f) une première entrée de produit de revêtement (16) pour l'introduction du premier composant de produit de revêtement (H) et
g) une deuxième entrée de produit de revêtement (17) pour l'introduction du deuxième composant de produit de revêtement (SL),
h) la première entrée de produit de revêtement (16) et/ou la deuxième entrée de produit de revêtement (17) débouchant dans l'espace de soupape (18) sur le côté de la membrane (19) opposé à l'entraînement de soupape (15) et
i) la pression de produit de revêtement dans l'espace de soupape (18) en aval derrière la membrane (19) comprimant, à partir d'une pression d'ouverture déterminée, l'aiguille de soupape (14, 20), par l'intermédiaire de la membrane (19), de la position de fermeture vers la position d'ouverture,
**caractérisée en ce que**
j) l'aiguille de soupape (14, 20) est constituée au moins partiellement d'un mélangeur (14 ; 14') qui mélange entre eux les composants du produit de revêtement (H, SL).

2. Soupape de produit de revêtement (1) selon la revendication 1, **caractérisée en ce que** le mélangeur (14 ; 14') est un mélangeur statique (14 ; 14'), plus particulièrement un mélangeur à grille (14) ou un mélangeur à spirale (14').

3. Soupape de produit de revêtement (1) selon l'une des revendications précédentes, **caractérisée en ce que**
a) la soupape de produit de revêtement (1) comprend un tube de couleur (creux (2) destiné à être monté dans un arbre de turbine creux d'un pulvérisateur rotatif, le tube de couleur (2) et l'arbre de turbine s'étendant de manière coaxiale dans l'état monté et
b) l'aiguille de soupape (14, 20) est disposée sous la forme du mélangeur (14 ; 14') dans le tube de couleur (2) ou
c) dans le tube de couleur (2), sont disposés plusieurs aiguilles de soupapes qui constituent chacune un mélangeur (14 ; 14').

4. Soupape de produit de revêtement (1) selon l'une des revendications précédentes, **caractérisée en ce que**
a) la soupape de produit de revêtement (1) comprend un élément de pression mobile (20) qui est relié, à son extrémité distale, avec le mélangeur mobile (14 ; 14') et qui déplace celui-ci,
b) l'élément de pression (20) est disposé de manière mobile, et
c) la membrane (19) est fixée de manière centrale et étanche sur l'élément de pression (20), tandis que la membrane (19) est fixée, avec son bord circonférentiel, de manière étanche, à la paroi interne de l'espace de soupape (18).

5. Soupape de produit de revêtement (1) selon la revendication 4, **caractérisée en ce que**
a) la première entrée de produit de revêtement (16) débouche, sur le côté de la membrane (19) opposé à l'entraînement de soupape (15), dans l'espace de soupape (18), de façon à ce que la membrane (19) étanchéifie l'entraînement de soupape (15) par rapport au mélangeur (14 ; 14') et
b) la deuxième entrée de produit de revêtement (17) débouche, sur le côté de la membrane (19) opposé à l'entraînement de soupape (15), dans l'espace de soupape (18), de façon à ce que la membrane (19) étanchéifie l'entraînement de soupape (15) par rapport au mélangeur (14 ; 14').

6. Soupape de produit de revêtement (1) selon l'une des revendications précédentes, **caractérisée en ce que** l'entraînement de soupape (15) comprend ce qui suit :
a) un piston mobile (24) qui agit sur l'aiguille de soupape (14, 20) afin de déplacer l'aiguille de soupape (14, 20),
b) une entrée d'air de commande, pour l'introduction d'un air de commande, l'air de commande agissant sur le piston (24) afin de déplacer le piston (24) et donc également l'aiguille de soupape (14, 20),
c) un ressort de soupape (25) qui agit avec une force élastique sur le piston (24) ou l'aiguille de soupape (14, 20),
d) la force élastique du ressort de soupape (25) étant, dans la position de fermeture et dans la position d'ouverture, de préférence d'au moins 20 N, 40 N ou 80 N et/ou de 400 N, 200 N ou 100 N maximum.

7. Soupape de produit de revêtement (1) selon la revendication 6, **caractérisée en ce que**
a) le ressort de soupape (25) comprime l'aiguille de soupape (14, 20) en direction de la position de fermeture et
b) l'air de commande comprime l'aiguille de soupape (14, 20) par l'intermédiaire du piston (24) en direction de la position d'ouverture,
c) le ressort de soupape (25) et la tête de soupape (12) sont disposés de préférence sur des côtés opposés du piston (24),
d) le piston (24) présente de préférence un diamètre de piston d'au moins 5 mm, 10 mm, 15 mm, 19 mm ou 25 mm afin de produire, lors du déplacement de l'aiguille de soupape (14, 20) vers la position d'ouverture, une grande force d'ouverture,
e) l'air de commande nécessite, pour le déplacement de l'aiguille de soupape (14, 20) vers la position d'ouverture, de préférence une pression d'air de commande inférieure à 6 bar, plus particulièrement à 5,5 bar, de façon à ce que l'air de commande puisse être provenir d'un réseau d'air comprimé conventionnel de 6 bar,
f) le piston (24) présente de préférence une section transversale circulaire ou en variante une section transversale ovale.

8. Soupape de produit de revêtement (1) selon la revendication 7, **caractérisée en ce que**
a) le ressort de soupape (25) comprime l'aiguille de soupape (14, 20) en direction de la position de fermeture avec une force de fermeture déterminée,
b) l'entraînement de soupape pneumatique (15) comprime, lors d'un contrôle pneumatique, l'aiguille de soupape (14, 20) en direction de la position d'ouverture avec une force d'ouverture déterminée,
c) la force d'ouverture est supérieure, d'un excès de force d'ouverture déterminé, à la force de fermeture afin de pouvoir ouvrir la soupape de produit de revêtement lorsque la tête de soupape (12) adhère au siège de soupape (11) et/ou
d) l'excès de force d'ouverture est de préférence supérieur à 20 N, 40 N, 60 N, 80 N, 100 N, 120 N ou 130 N.

9. Soupape de produit de revêtement (1) selon l'une des revendications précédentes, **caractérisée en ce que**
a) la membrane (19) présente un diamètre de membrane d'au moins 3 mm, 6 mm ou 9 mm et/ou de 40 mm, 20 mm ou 11 mm maximum, plus particulièrement de 10 mm et/ou
b) la pression d'ouverture du produit de revêtement est d'au moins 8 bar, 12 bar ou 14 bar et/ou de 22 bar, 18 bar ou 16 bar maximum.

10. Soupape de produit de revêtement (1) selon l'une des revendications précédentes, **caractérisée en ce que**
a) le siège de soupape (11) se rétrécit dans la direction d'écoulement avec un angle de siège (β) déterminé,
b) la tête de soupape (12) se rétrécit dans la direction d'écoulement avec un angle de tête (α) déterminé,
c) l'angle de siège (β) est globalement égal à l'angle de tête (α),
d) l'angle de siège (β) est de préférence supérieur à 20°, 30° ou 35° et/ou inférieur à 70°, 60° ou 50°,
e) l'angle de tête (α) est de préférence supérieur à 20°, 30° ou 35° et/ou inférieur à 70°, 60° ou 50°.

11. Soupape de produit de revêtement (1) selon l'une des revendications précédentes, **caractérisée en ce que**
a) dans la tête de soupape (12) de l'aiguille de soupape (14, 20), est inséré un élément d'étanchéité supplémentaire (13) afin d'étanchéifier le siège de soupape (11) dans la position de fermeture et/ou
b) l'élément d'étanchéité (13) est constitué d'un matériau différent de la tête de soupape (12) de l'aiguille de soupape (14, 20) et/ou
c) l'élément d'étanchéité (13) est constitué d'un matériau élastique et/ou
d) l'élément d'étanchéité (13) est constitué de caoutchouc perfluorocarboné et/ou
e) l'élément d'étanchéité est vulcanisé sur la tête de soupape (12) et/ou
f) l'élément d'étanchéité (13) est une bague d'étanchéité qui est insérée dans une rainure annulaire dans la tête de soupape (12) et/ou
g) la tête de soupape (12) est constituée de titane.

12. Soupape de produit de revêtement (1) selon la revendication 11, **caractérisée en ce que**
a) la tête de soupape (12) se rétrécit de manière globalement conique dans la direction d'écoulement,
b) le siège de soupape (11) se rétrécit de manière globalement conique dans la direction d'écoulement,
c) la tête de soupape (12) comprend, dans sa surface d'enveloppe externe conique, une rainure annulaire dans laquelle l'élément d'étanchéité (13) est inséré,
d) la surface d'enveloppe externe de la tête de soupape (12) forme, en amont de l'élément d'étanchéité (13) une surface d'appui annulaire (28) et s'appuie avec la surface d'appui (28) contre le siège de soupape (11),
e) la tête de soupape (12) comprend, dans la surface d'appui (28), au moins une rainure de rinçage axiale (29), qui permet, dans la position de fermeture de l'aiguille de soupape (14, 20), le guidage d'un produit de rinçage de l'espace de soupape (18) vers l'élément d'étanchéité (13),
f) la rainure de rinçage (29) présente de préférence une largeur de rainure d'au moins 1 mm et de 2 mm maximum.

13. Soupape de produit de revêtement (1) selon l'une des revendications 11 à 12, **caractérisée en ce que**
a) la tête de soupape (12) comprend une butée rigide (28) et s'appuie, dans la position de fermeture, avec la butée (28), contre le siège de soupape (11), plus particulièrement avec la surface d'appui annulaire (28) et
b) l'élément d'étanchéité est exposé, dans la tête de soupape (12), dans la position de fermeture de l'aiguille de soupape (14, 20), à une pression qui est indépendante de la force de fermeture s'exerçant sur l'aiguille de soupape (14, 20), car la tête de soupape (12) s'appuie, avec sa butée rigide (28), contre le siège de soupape (11).

14. Pulvérisateur rotatif pour l'application d'un jet de pulvérisation du produit de revêtement, avec
a) une turbine avec un arbre de turbine creux pour le montage d'un plateau à cloche au niveau de l'extrémité distale de l'arbre de turbine,
b) une soupape de produit de revêtement (1) selon l'une des revendications précédentes, le tube de couleur (2) s'étendant dans l'arbre de turbine creux.
